(19) Europäisches Patentamt
European Patent Office
Office européen des brevets

(11) **EP 4 525 377 A1**

(12) **EUROPEAN PATENT APPLICATION**

(43) Date of publication:
**19.03.2025 Bulletin 2025/12**

(21) Application number: **24192946.2**

(22) Date of filing: **05.08.2024**

(51) International Patent Classification (IPC):
**H04L 12/413** (2006.01)    **H04L 12/64** (2006.01)
**H04L 45/50** (2022.01)

(52) Cooperative Patent Classification (CPC):
**G06Q 10/06; G06Q 10/0631; G06Q 10/06312;
H04L 12/413**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023 JP 2023147488**

(71) Applicant: **Fujitsu Limited
Kawasaki-shi, Kanagawa 211-8588 (JP)**

(72) Inventor: **IKEDA, Hiroshi
Kawasaki-shi, 211-8588 (JP)**

(74) Representative: **Haseltine Lake Kempner LLP
Cheapside House
138 Cheapside
London EC2V 6BJ (GB)**

(54) **COMPUTER PROGRAM, SCHEDULING METHOD, AND INFORMATION PROCESSING APPARATUS**

(57)    An information processing apparatus obtains system data representing a system including first objects that each undergo a state change in response to an operation and second objects that each undergo a state change in response to the state change of one or more first objects related thereto and assigning each second object a cost that changes in response to the state change. The information processing apparatus determines, for each second object, the number of unchanged first objects among the related first objects, a change in total cost caused by operating the unchanged first objects, and an index value that increases as the number of unchanged first objects decreases and increases as the change increases. The information processing apparatus generates schedule data representing an operation sequence for the first objects such that the second objects undergo the state change preferentially in descending order of index values.

FIG. 1

**Description**

FIELD

The embodiments discussed herein relate to a computer program, a scheduling method, and an information processing apparatus.

BACKGROUND

There are cases in which a computer solves an optimization problem to determine a sequence of operations for a plurality of objects included in a system, taking into account the cost of the entire system. The system, which is an optimization target, may include two types of objects: group A and group B. Each object in the group A undergoes a state change in response to an operation. Each object in the group B undergoes a state change in response to the state changes of its one or more related objects among the objects of the group A. Each of some or all of the objects is assigned a cost that changes in response to a state change.

A change in the sequence of operations for the objects in the group A consequently changes the timing when each object in the group B undergoes the state change. Therefore, if the sequence of operations is changed, a curve representing the temporal change in the unit time cost of the entire system is changed accordingly. For example, the computer searches for a sequence of operations that minimizes the system cost obtained by integrating the unit time cost.

For example, there is proposed a circuit migration sequence generation method for determining a circuit migration sequence in which a plurality of circuits in a circuit-switched network are to be migrated. Each circuit passes through at least one of a plurality of circuit switching devices included in the circuit-switched network. This proposed method calculates, for each circuit, a score representing the number of circuit switching devices that is no longer needed after the migration of the circuit. The proposed method repeats a process of removing the circuit with the highest score and recalculating the score for each remaining circuit until no more circuits exist.

Here, for a just-in-time (JIT) manufacturing system, there is proposed a modeling method of modeling a process chain such that a state change in a replenishment process of one component causes a state change in a replenishment process of another component. Further, there is proposed a change management system in which an operation plan for changing the states of a plurality of components is created on the basis of the dependence relationships between the plurality of components, the current state of each component, and a desired state of each component after the change. Still further, there is proposed a resource allocation apparatus that manages resources to be allocated to network nodes through which a plurality of communication flows pass on the basis of the network nodes and their data traffic amounts.

U.S. Patent Application Publication No. 2007/0005411
Japanese Laid-open Patent Publication No. 2015-215887
Japanese Laid-open Patent Publication No. 2017-79352
U.S. Patent Application Publication No. 2022/0094571

As described above, there are cases in which a computer searches for a schedule indicating a sequence of operations for one type of objects among two types of objects included in a system. However, the heuristics provided by the circuit migration sequence generation method taught in U.S. Patent Application Publication No. 2022/0094571 may sometimes fail to create a highly efficient schedule, and therefore there is room for improvement.

For example, in the circuit migration sequence generation method taught in U.S. Patent Application Publication No. 2022/0094571, it may happen that no circuit switching devices get into an unused state regardless of which circuit is removed in an early stage of the search. This method therefore may sometimes fail to optimize the sequence of operations in the early stage, even with the use of the above-described scores.

SUMMARY

It is desirable to create a highly efficient schedule.

According to one embodiment of one aspect, there is provided a computer program that causes a computer to perform a process including: obtaining system data representing a system including a plurality of first objects that each undergo a first state change in response to an operation and a plurality of second objects that are each related to one or more first objects among the plurality of first objects and that each undergo a second state change in response to the first state change of the one or more first objects related thereto, the system data assigning each of the plurality of second objects a cost that changes in response to the second state change; determining, for each of the plurality of second objects, based on the system data, a number of unchanged first objects that are yet to undergo the first state change among the one or more first objects related thereto, and a change in total cost defined for the system using costs of the plurality of second objects, the change in the total cost being caused by performing the operation on the unchanged first objects, and determining, for the each of the plurality of second objects, an index value that increases as the number of unchanged first objects decreases and increases as the change in the total cost increases; and generating schedule data representing a sequence in which the operation is to be performed on the plurality of first objects such that the plurality of second objects undergo the second state change preferentially in descending order of the index value.

BRIEF DESCRIPTION OF DRAWINGS

The invention is described, by way of example only, with reference to the following drawings, in which:

FIG. 1 is a view for describing an information processing apparatus according to a first embodiment;
FIG. 2 illustrates an example of the hardware configuration of an information processing apparatus according to a second embodiment;
FIG. 3 illustrates a first example of a graph representing the relationships between objects;
FIG. 4 illustrates a first example of a temporal change in unit time cost;
FIG. 5 illustrates an example of a system that is a scheduling target;
FIG. 6 illustrates an example of visualizing an index Z;
FIG. 7 illustrates a first example of schedule search;
FIG. 8 illustrates a second example of a temporal change in unit time cost:

FIG. 9 illustrates a second example of a graph representing the relationships between objects;
FIG. 10 illustrates a second example of schedule search;
FIG. 11 illustrates a third example of a temporal change in unit time cost;
FIG. 12 illustrates examples of a system cost comparison;
FIG. 13 illustrates an example of the functions of the information processing apparatus according to the second embodiment;
FIG. 14 is a flowchart illustrating an example of a procedure for scheduling under AND relationship;
FIG. 15 is a flowchart illustrating an example of a procedure for object selection under AND relationship;
FIG. 16 is a flowchart illustrating an example of a procedure for stack organization;
FIG. 17 is a flowchart illustrating an example of a procedure for system cost calculation;
FIG. 18 is a flowchart illustrating an example of a procedure for scheduling under OR relationship; and
FIG. 19 is a flowchart illustrating an example of a procedure for object selection under OR relationship.

DESCRIPTION OF EMBODIMENTS

Hereinafter, embodiments will be described with reference to the accompanying drawings.

First Embodiment

A first embodiment will now be described.

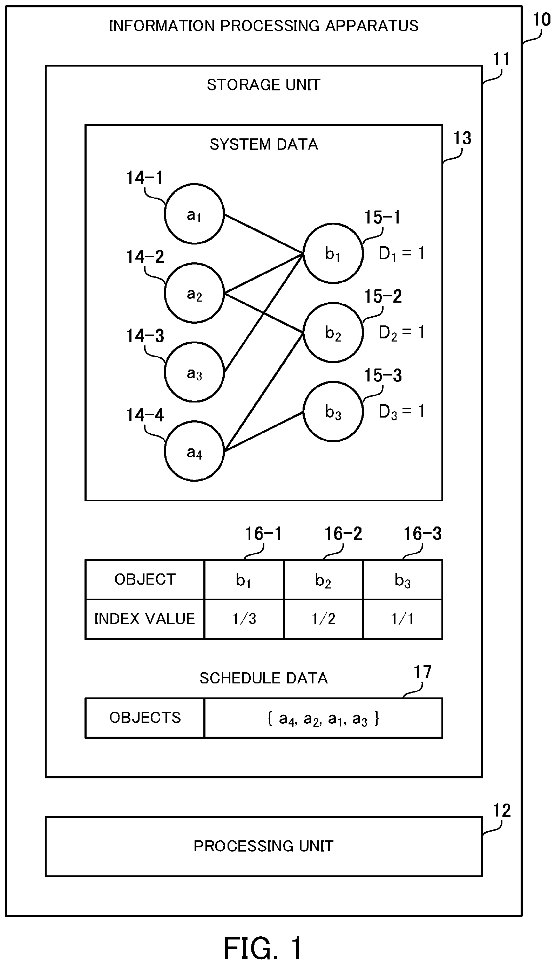

FIG. 1 is a view for describing an information processing apparatus according to the first embodiment.
The information processing apparatus 10 is designed to search for an appropriate operation sequence of operations for a plurality of objects included in a system in terms of the cost of the entire system and generate schedule data representing the operation sequence. The information processing apparatus 10 may be a client device or a server device. The information processing apparatus 10 may be called a computer, a scheduling apparatus, or an optimization apparatus.
The information processing apparatus 10 includes a storage unit 11 and a processing unit 12. The storage unit 11 may be a volatile semiconductor memory, such as a random access memory (RAM). Alternatively, the storage unit 11 may be a non-volatile storage device, such as a hard disk drive (HDD) or a flash memory.
For example, the processing unit 12 is a processor such as a central processing unit (CPU), a graphics processing unit (GPU), or a digital signal processor (DSP). Note that the processing unit 12 may include an application specific integrated circuit (ASIC), a field programmable gate array (FPGA), or another electronic circuit. For example, the processor runs programs stored in a memory such as a RAM (which may be the storage unit 11). The information processing apparatus 10 may include a plurality of processors. A set of the processors may be called a multiprocessor or simply a "processor." A processor may be called "processor circuitry". Among a plurality of processing steps to be executed by the information processing apparatus 10, one processor may execute a processing step while another processor may execute another processing step.
The storage unit 11 stores system data 13. The system data 13 may be generated by a user. The information processing apparatus 10 may accept the system data 13 input by the user, or may receive the system data 13 from another information processing apparatus. The system data 13 represents a system including a plurality of objects. The plurality of objects include a plurality of first objects including objects 14-1 to 14-4 and a plurality of second objects including objects 15-1 to 15-3.

For example, the plurality of first objects are of the same type and make up a first group. The plurality of second objects are of the same type and make up a second group. Note that the first objects and the second objects may be of different types. Examples of the object types include device, product, user, organization, and others. As an example, the first objects are circuits, and the second objects are circuit switching devices that are used by the circuits. As another example, the first objects are manufacturing devices, and the second objects are products that are manufactured by the manufacturing devices.

Each second object is related to one or more first objects. For example, this relation may be a relationship in which one or more circuits share a certain circuit switching device or a relationship in which one or more manufacturing devices are used to produce a certain product. A certain first object may be related to two or more second objects. For example, the object 15-1 is related to the objects 14-1 to 14-3. The objects 15-2 is related to the objects 14-2 and 14-4. The object 15-3 is related to the object 14-4.

Each first object undergoes a first state change in response to an operation. Each second object undergoes a second state change in response to the first state changes of its one or more related first objects. A state change may be called a state transition, and changing a state may be called triggering or firing. For example, a state change indicates a shutdown from ON to OFF or a startup from OFF to ON. For example, the operation indicates an ON-OFF switching operation for the first objects. As an example, the first state change is the shutdown of a circuit, and the second state change is the shutdown of a circuit switching device. As another example, the first state change is the startup of a manufacturing device, and the second state change is the startup of production of a product.

In the case where a certain second object is related to two or more first objects, a condition to cause the second state change may be an AND condition. Under this condition, the second state change occurs when all of the two or more related first objects undergo the first state change. As an example, a circuit switching device is shut down when all circuits related thereto are shut down. As another example, the production of a product is started when all manufacturing devices related thereto are started.

The system data 13 assigns each of the plurality of second objects a cost that changes in response to the second state change. The system data 13 may define costs before and after the second state change or may define the difference in the cost before and after the second state change. For example, the cost is a unit time cost that is incurred by a second object being ON. The plurality of second objects may be assigned the same cost or different costs. In addition, the system data 13 may assign a cost to each of some or all of the plurality of first objects. The cost of each first object may change in response to the first state change.

For example, each of the objects 15-1 to 15-3 has a cost of 1 before the second state change and a cost of 0 after the second state change. This means that, when the objects 15-1 to 15-3 are shut down, their unit time costs decrease by 1.

The system data 13 may be represented as a graph with a plurality of nodes and a plurality of edges. In this case, the plurality of first objects and the plurality of second objects are represented as nodes. The relations between the first objects and the second objects are represented by edges between the nodes. The cost of an object corresponds to an attribute that the node has. This graph has edges between nodes of different groups, but does not have edges between the nodes of the same group. That is, this graph is a bipartite graph.

The processing unit 12 generates schedule data 17 representing an operation sequence for the plurality of first objects on the basis of the system data 13. To this end, the processing unit 12 calculates an index value for each of the plurality of second objects. For example, the processing unit 12 calculates an index value 16-1 for the object 15-1, an index value 16-2 for the object 15-2, and an index value 16-3 for the object 15-3. The processing unit 12 determines the operation sequence for the plurality of first objects such that the second objects undergo the second state change preferentially in descending order of index values.

In calculating the index value for a second object, the processing unit 12 calculates the number of unchanged first objects that are yet to undergo the first state change among its one or more related first objects. In addition, the processing unit 12 calculates a change in total cost caused by performing the operation on the unchanged first objects. Then, the processing unit 12 calculates the index value that increases as the number of unchanged first objects decreases and increases as the change increases. The index value may be proportional to the change and inversely proportional to the number of unchanged first objects, and may be calculated by dividing the change by the number of unchanged first objects.

The total cost is a cost defined for the entire system using the current costs of the plurality of second objects. For example, the total cost is the sum of the current costs of the plurality of second objects. Note that if a cost is assigned to each of some or all of the first objects as well, the total cost may be defined further using the current costs of the first objects. For example, the total cost is the sum of the current costs of the plurality of first objects and the current costs of the plurality of second objects.

When the operation is performed on the unchanged first objects related to a second object, the unchanged first objects each undergo the first state change, which in turn causes the second object in question to undergo the second state change. Therefore, the cost of the second object in question changes, and the total cost changes accordingly. For example, the cost of the second object decreases, and the total cost decreases accordingly. Thus, the change in the total cost may sometimes be equal to the difference in the cost of the second object in question before and after the second state change.

Note that, in the case where a cost is assigned to each of some or all of the first objects as well, the costs of the first objects operated may change, and the total cost may further change accordingly. For example, the costs of the first objects operated may decrease, and the total cost may further decrease accordingly. Thus, the change in the total cost may sometimes be the sum of the difference in the cost of the second object in question and the differences in the cost of the first objects operated.

For example, assume that all objects 14-1 to 14-4 are yet to undergo the first state change and all objects 15-1 to 15-3 are yet to undergo the second state change. The number of unchanged first objects related to the object 15-1 is 3, and the change in the total cost caused by operating the three first objects is 1. Therefore, the index value 16-1 of the object 15-1 is calculated as 1/3 = 0.333.

Further, the number of unchanged first objects related to the object 15-2 is 2, and the change in the total cost caused by operating the two first objects is 1. Therefore, the index value 16-2 of the object 15-2 is calculated as 1/2 = 0.500. Still further, the number of unchanged first objects related to the object 15-3 is 1, and the change in the total cost caused by operating the one first object is 1. Therefore, the index value 16-3 of the object 15-3 is calculated as 1/1 = 1.000.

For example, the processing unit 12 selects the object 15-3 with the maximum index value from the objects 15-1 to 15-3. The processing unit 12 then specifies the object 14-4 that needs to be operated in order to cause the second state change in the object 15-3, and sets the object 14-4 in the first place in the operation sequence. In the case where two or more unchanged first objects are related to the selected second object, the processing unit 12 may arrange these two or more first objects in a random order or in descending order of their costs in the operation sequence.

Each time selecting one second object that undergoes the second state change, the processing unit 12 may recalculate the index value for each unselected second object that has not been selected. In this case, the processing unit 12 selects one second object that undergoes the second state change next, on the basis of the recalculated index values. For example, the processing unit 12 selects the second object with the maximum recalculated index value.

In recalculating the index values, the processing unit 12 regards the first objects that already have their placements in the operation sequence as having undergone the first state change and regards the second objects already selected as having undergone the second state change. In this connection, the processing unit 12 may recalculate the index value for each unselected second object each time selecting a certain number of second objects that undergo the second state change. In this case, for example, the processing unit 12 selects the certain number of second objects in descending order of index values.

For example, after the operation is performed on the object 14-4, the index value of the object 15-1 is calculated as 1/3 = 0.333, and the index value of the object 15-2 is calculated as 1/1 = 1.000. Therefore, the processing unit 12 selects the object 15-2 next, and sets the object 14-2 in the second place in the operation sequence. Lastly, the processing unit 12 selects the object 15-1, and sets the objects 14-1 and 14-3 in the third and fourth places in the operation sequence.

The processing unit 12 outputs the generated schedule data 17. The processing unit 12 may store the schedule data 17 in a non-volatile storage device, may display it on a display device, or may send it to another information processing apparatus.

As described above, the information processing apparatus 10 of the first embodiment obtains the system data 13. The system data 13 represents a system including a plurality of first objects that each undergo a first state change in response to an operation and a plurality of second objects that each undergo a second state change in response to the first state changes of its one or more related first objects. In addition, the system data 13 assigns each of the plurality of second objects a cost that changes in response to the second state change.

The information processing apparatus 10 calculates, for each second object, the number of unchanged first objects that are yet to undergo the first state change among the related first objects, on the basis of the system data 13. In addition, the information processing apparatus 10 calculates the change in total cost defined for the system using the costs of the plurality of second objects, the change being caused by performing the operation on the unchanged first objects. The information processing apparatus 10 then calculates an index value that increases as the number of unchanged first objects decreases and increases as the change increases.

Then, the information processing apparatus 10 generates the schedule data 17 representing the operation sequence for the plurality of first objects such that the plurality of second objects undergo the second state change preferentially in descending order of index values.

In the manner described above, the schedule data 17 representing a preferable operation sequence for the plurality of first objects is generated in terms of the total cost. For example, the system cost obtained by integrating the unit time cost of the entire system over a predetermined period is reduced. This means streamlining the operation of the system during the transition period during which the first state change and the second state change occur.

In addition, as compared to conventional heuristics, the optimization accuracy is improved, which allows for the generation of the schedule data 17 representing a highly efficient schedule. For example, another scheduling method is considered, which counts, for each first object, the number of second objects that undergo a second state change when an operation is performed on the first object, and selects the first objects preferentially in descending order of the number of second objects. However, this scheduling method does not take into account such second objects that each undergo the second state change when two or more first objects are operated, which may result in low search accuracy in the early stage of the search where many unchanged first objects exist.

By contrast, the information processing apparatus 10 calculates an index value for each second object. A higher index value indicates that the total cost significantly changes by a small number of first objects being operated. Therefore, by causing the second objects to undergo the second state change preferentially in descending order of index values, the time efficiency of the operation on the first objects is improved.

In this connection, the information processing apparatus 10 may recalculate the index value for each unselected second object each time it selects one second object that undergoes the second state change. This allows for the creation of a highly efficient schedule even for lower-ranked objects in the operation sequence.

In addition, in the case where the same index value is calculated for two or more second objects, the information processing apparatus 10 may generate two or more patterns each representing the result of tentatively selecting a different one of the two or more second objects and recalculating the index value for each unselected second object. Then, by comparing the generated two or more patterns, the information processing apparatus 10 may retrospectively determine the operation sequence for the second objects with the same index value. This allows for the determination of the operation sequence for higher-ranked objects taking into account the optimization status of lower-ranked objects even in the case where it is difficult to determine the operation sequence for the higher-ranked objects alone, which results in creating an overall highly-efficient schedule.

In addition, the system data 13 may assign a cost to each first object, and the total cost of the system may be defined using the costs of the plurality of first objects and the costs of the plurality of second objects. This makes it possible to correctly model the system according to the types of the objects and define an appropriate optimization problem. Furthermore, an index value may be calculated by dividing the change in the total cost by the number of unchanged first objects. This allows for a simple representation of the relationship in which the index value is proportional to the change and is inversely proportional to the number of unchanged first objects.

Second Embodiment

A second embodiment will now be described.

An information processing apparatus 100 of the second embodiment is designed to model the relationships between two types of objects included in a system and solve an optimization problem to optimize an operation sequence of operations for one type of objects. The information processing apparatus 100 may be a client device or a server device. The information processing apparatus 100 may be called a computer, a scheduling apparatus, or an optimization apparatus. Note that the information processing apparatus 100 corresponds to the information processing apparatus 10 of the first embodiment.

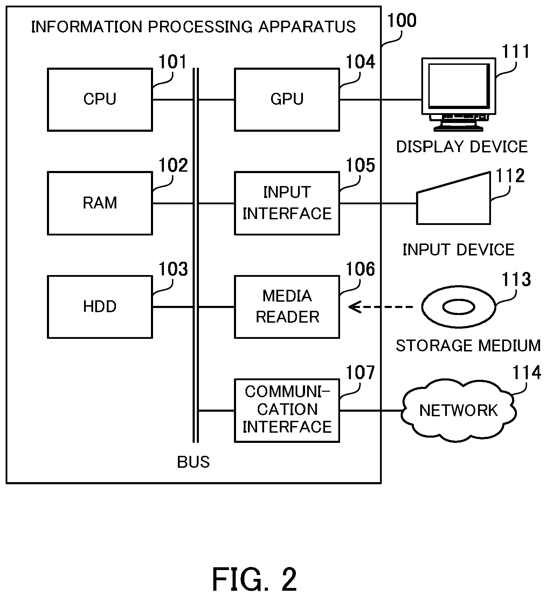

FIG. 2 illustrates an example of the hardware configuration of the information processing apparatus according to the second embodiment.

The information processing apparatus 100 includes a CPU 101, a RAM 102, an HDD 103, a GPU 104, an input interface 105, a media reader 106, and a communication interface 107, which are connected to a bus. The CPU 101 corresponds to the processing unit 12 of the first embodiment. The RAM 102 or HDD 103 corresponds to the storage unit 11 of the first embodiment.

The CPU 101 is a processor that executes program commands. The CPU 101 loads programs and data from the HDD 103 to the RAM 102 and executes the programs. The information processing apparatus 100 may be provided with a plurality of processors.

The RAM 102 is a volatile semiconductor memory that temporarily stores programs that are run by the CPU 101, and data that is used by the CPU 101 in processing. The information processing apparatus 100 may be provided with a different type of volatile memory than RAM.

The HDD 103 is a non-volatile storage device that stores software programs such as operating system (OS), middleware, and application software, and data. The information processing apparatus 100 may be provided with another type of non-volatile storage device such as a flash memory or a solid state drive (SSD).

The GPU 104 performs image processing in collaboration with the CPU 101 and outputs images to a display device 111 connected to the information processing apparatus 100. Examples of the display device 111 include a cathode ray tube (CRT) display, a liquid crystal display, an organic electro-luminescence (EL) display, and a projector. Another type of output device such as a printer may be connected to the information processing apparatus 100.

The GPU 104 may be used as a general-purpose computing on graphics processing unit (GPGPU). The GPU 104 may be able to run programs in accordance with commands from the CPU 101. The information processing apparatus 100 may be provided with a volatile semiconductor memory other than the RAM 102 as a GPU memory.

The input interface 105 receives an input signal from an input device 112 connected to the information processing apparatus 100. Examples of the input device 112 include a mouse, a touch panel, and a keyboard. A plurality of input devices may be connected to the information processing apparatus 100.

The media reader 106 is a reading device that reads programs and data from a storage medium 113. Examples of the storage medium 113 include a magnetic disk, an optical disc, and a semiconductor memory. Magnetic disks include flexible disks (FDs) and HDDs. Optical discs include compact discs (CDs) and digital versatile discs (DVDs). The media reader 106 copies the programs and data from the storage medium 113 to another storage medium such as the RAM 102 or the HDD 103. The read programs may be run by the CPU 101.

The storage medium 113 may be a portable storage medium. The storage medium 113 may be used to distribute the programs and data. The storage medium 113 and HDD 103 may be referred to as computer-readable storage media.

The communication interface 107 communicates with other information processing apparatuses over a network 114. The communication interface 107 may be a wired communication interface that is connected to a wired communication device such as a switch or a router, or may be a wireless communication interface that is connected to a wireless communication device such as a base station or an access point.

The following describes a graph obtained by modeling an optimization target system.

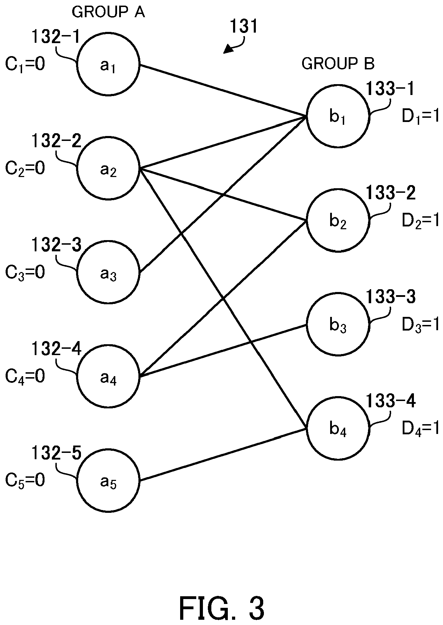

FIG. 3 illustrates a first example of a graph representing the relationships between objects.

The graph 131 is a bipartite graph with a plurality of nodes and a plurality of edges, in which the nodes are grouped into two types. The graph 131 may be a directed graph, in which the edges have direction, or an undirected graph, in which the edges have no direction. A user may create the graph 131, or the information processing apparatus 100 may receive the graph 131 from another information processing apparatus.

The graph 131 includes nodes 132-1 to 132-5 and 133-1 to 133-4. The nodes 132-1 to 132-5 represent different objects of the same type. The objects represented by the nodes 132-1 to 132-5 belong to a group A. In the following description, the objects belonging to the group A may be referred to as objects a. The nodes 133-1 to 133-4 represent different objects of the same type. The objects represented by the nodes 133-1 to 133-4 belong to a group B. In the following description, the objects belonging to the group B may be referred to as objects b.

An object may be a tangible object or a set of tangible objects, or may be an intangible object or a set of intangible objects. For example, an object may be a device, a building, a land, a set of devices, a person, or a group that is a set of people. Each object a in the group A undergoes a state change in response to an operation. In the second embodiment, changing a state may be called triggering or firing. The operation may be performed manually, or may be performed by an apparatus such as a computer according to a schedule. In the second embodiment, the objects a have two states: ON and OFF, and triggering indicates switching between ON and OFF.

Each object b in the group B is triggered in response to the triggering of its one or more related objects a. In the second embodiment, the objects b have two states: ON and OFF, and triggering indicates switching between ON and OFF. In the graph 131, an object a related to an object b is represented by an edge. An object a may be related to two or more objects b, or an object b may be related to two or more objects a.

The node 133-1 is connected to the nodes 132-1 to 132-3 with edges. The node 133-2 is connected to the nodes 132-2 and 132-4 with edges. The node 133-3 is connected to the node 132-4 with an edge. The node 133-4 is connected to the nodes 132-2 and 132-5 with edges. In this connection, the objects in the group A are not related to each other, and therefore no edge exists between the nodes 132-1 to 132-5. Similarly, the objects in the group B are not related to each other, and no edge exists between the nodes 133-1 to 133-4. That is to say, the graph 131 is a bipartite graph.

As described above, an object b may be related to two or more objects a. In this case, a triggering condition for the object b may be AND or OR. The AND condition means that all of the two or more related objects a need to be triggered, whereas the OR condition means that at least one of the two or more related objects a needs to be triggered. Whether the triggering condition is AND or OR depends on an optimization target system. Therefore, the triggering condition is specified by the user. The second embodiment provides description of both an optimization under the AND condition and an optimization under the OR condition. In this connection, in the second embodiment, it is assumed that the same triggering condition is applied to all the objects b.

A cost C is defined for each object a in the group A. The cost C may change in response to the triggering of the object a, and may differ between the objects a. The cost C of an object a represents a unit time cost that is incurred by the object a per unit time. In the second embodiment, to simplify an optimization problem, the cost before or after triggering, serving as a base cost, is set to 0, and the cost C denotes the difference in the cost caused by the triggering.

In addition, a cost D is defined for each object b in the group B. The cost D may change in response to the triggering of the object b, and may differ between the objects b. The cost D of an object b represents a unit time cost that is incurred by the object b per unit time. In the second embodiment, to simplify the optimization problem, the cost before or after triggering, serving as a base cost, is set to 0, and the cost D denotes the difference in the cost caused by the triggering.

In the second embodiment, a typical shutdown sequence problem as follows will be considered as an example. At the start time, all objects a are ON, and all objects b are ON. At the end time, all objects a are OFF, and all objects b are OFF. In the transition period from the start time to the end time, the user operates the objects a one by one, one per unit time, to switch the state of each operated object a from ON to OFF. Each object b switches from ON to OFF when all or at least one of its one or more related objects a is switched to OFF.

The unit time cost of an object a being OFF is lower than or equal to that of the object a being ON. The cost C is the difference calculated by subtracting the unit time cost during OFF from the unit time cost during ON and has a value of 0 or greater. In the second embodiment, to simplify the description, the costs C of all objects a are set to 0. In addition, the unit time cost of an object b being OFF is lower than that of the object b being ON. The cost D is the difference calculated by subtracting the unit time cost during OFF from the unit time cost during ON and has a value of greater than 0. In the second embodiment, to simplify the description, the costs D of all objects b are set to 1.

The unit time cost of the entire system is the sum of the costs C of objects a that are yet to be triggered and the costs D of objects b that are yet to be triggered. The unit time cost at the start time is the sum of the costs C of all objects a and the costs D of all objects b. The unit time cost at the end time is 0. Both the triggering timing of each object b and a curve representing a temporal change in the unit time cost depend on the operation sequence for the group A. The information processing apparatus 100 determines an appropriate operation sequence for the group A that minimizes the system cost obtained by integrating the unit time cost over the period from the start time to the end time.

In this connection, the schedule optimization of the second embodiment is applicable to various optimization problems as exemplified as follows. In the case of a network equipment shutdown problem, the objects a are circuits, and the objects b are circuit switching devices. The unit time cost of each object b decreases from 1 to 0 in response to triggering. The triggering condition for the objects b is AND. The information processing apparatus 100 determines a sequence in which the circuits are to be shut down, such as to minimize the system cost.

In the case of a factory equipment shutdown problem, the objects a are manufacturing devices, and the objects b are products. The unit time profit of each object b decreases from 1 to 0 in response to triggering. The profit may be defined as a negative cost. The triggering condition for the objects b is OR. The information processing apparatus 100 determines a sequence in which the manufacturing devices are to be shut down, such as to maximize the system profit. In the case of a factory equipment re-startup problem, the objects a are manufacturing devices, and the objects b are products. The unit time profit of each object b increases from 0 to 1 in response to triggering. The triggering condition for the objects b is AND. The information processing apparatus 100 determines a sequence in which the manufacturing devices are to be started, such as to maximize the system profit.

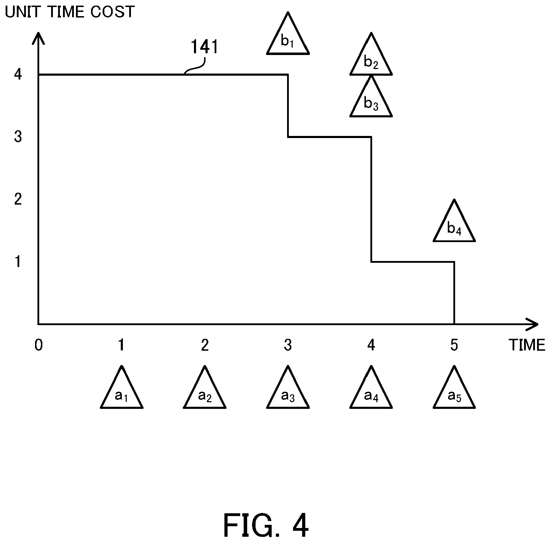

FIG. 4 illustrates a first example of a temporal change in unit time cost.

A curve 141 corresponds to the above-described graph 131 and represents a change in the unit time cost of the entire system in the case where the triggering condition for the objects b is AND and the objects a are operated in the order of ai, $a_2$, $a_3$, $a_4$, and $a_5$.

At time 1, the object $a_1$ is triggered. The unit time cost does not change since the cost $C_1$ is 0 and no object b is triggered. At time 2, the object $a_2$ is triggered. The unit time cost does not change since the cost $C_2$ is 0 and no object b is triggered. At time 3, the object $a_3$ is triggered. At this point in time, the object $b_1$ is triggered. Since the cost $D_1$ is 1, the unit time cost decreases by 1.

Then, at time 4, the object $a_4$ is triggered. At this point in time, the objects $b_2$ and $b_3$ are triggered. Since the costs $D_2$ and $D_3$ are 1, the unit time cost decreases by 2. Lastly, at time 5, the object as is triggered. At this point in time, the object $b_4$ is triggered. Since the cost $D_4$ is 1, the unit time cost decreases by 1. The area below the curve 141 represents the system cost. Note that the curve 141 is not a curve that minimizes the system cost.

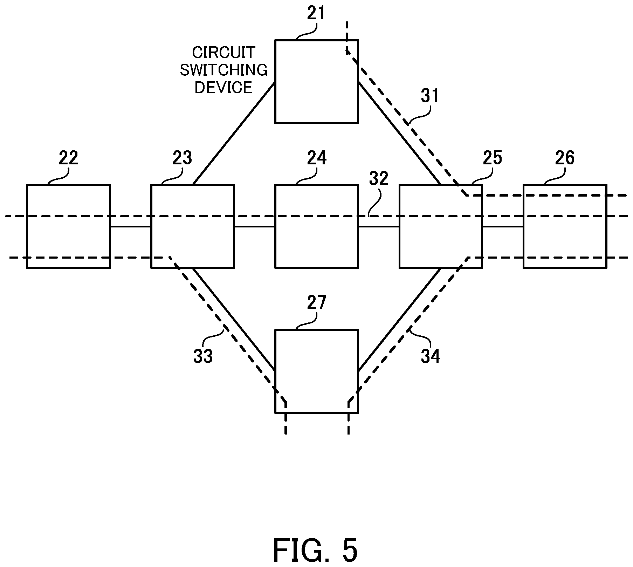

FIG. 5 illustrates an example of a system that is a scheduling target.

As described above, a circuit-switched system is one example of an optimization target system. The graph 131 may be considered to represent the structure of the circuit-switched system. The circuit-switched system includes circuit switching devices 21 to 27 and circuits 31 to 34. The circuits 31 to 34 are each a connection that connects two terminal devices via one or more circuit switching devices. The circuit switching devices 21 to 27 each transfer signals on one or more circuits.

The circuit 31 passes through the circuit switching devices 21, 25, and 26. The circuit 32 passes through the circuit switching devices 22 to 26. The circuit 33 passes through the circuit switching devices 22, 23, and 27. The circuit 34 passes through the circuit switching devices 25, 26, and 27. The circuits 31 to 34 correspond to objects a. The circuit switching devices 21 to 27 correspond to objects b. Each circuit switching device 21 to 27 incurs a unit time cost during operation. Each circuit switching device 21 to 27 is removable when there is no circuit that passes through it to transfer signals. The information processing apparatus 100 determines a sequence in which the circuits 31 to 34 are to be migrated to another system such that more circuit switching devices are removable early among the circuit switching devices 21 to 27.

The following describes schedule search in the case where the triggering condition is AND.

The information processing apparatus 100 calculates T of Equation (1) for each object b that is yet to be triggered. Here, $A_b$ denotes a set of objects a that are related to the object b, and $R_A$ denotes a set of objects a that are already triggered. That is, T denotes the number of objects a that are yet to be triggered among the objects a related to the object b. In the case where a certain object b and another object b are triggered at the same time, T for the other object b is 0.

$$T = |A_b \cap \overline{R_A}| \qquad (1)$$

In addition, the information processing apparatus 100 calculates G of Equation (2) for each object b that is yet to be triggered. Here, $D_b$ denotes the cost of the object b, and $C_a$ denotes the cost of an object a. Therefore, G is the sum of the cost $D_b$ of the object b and the costs $C_a$ of the objects a that need to be operated. That is, G denotes a reduction in the unit time cost of the entire system, caused by operating all related objects a that are yet to be triggered.

$$G = D_b + \sum_{a \in (A_b \cap \overline{R_A})} C_a \qquad (2)$$

Then, for each object b that is yet to be triggered, the information processing apparatus 100 calculates $Z_b$ of Equation (3) using the above T and G. BigZ is a sufficiently large positive constant. If T is 0, $Z_b$ is BigZ. If T is not 0, $Z_b$ is calculated by dividing G by T. That is, the higher G is, the higher $Z_b$. The lower T is, the higher $Z_b$.

$$Z_b = \begin{cases} BigZ & \text{if } T = 0 \\ \dfrac{G}{T} & \text{else} \end{cases} \qquad (3)$$

The information processing apparatus 100 selects the object b with the maximum $Z_b$ as an object b to be triggered next. The information processing apparatus 100 then selects the object a that is related to the selected object b and is yet to be triggered, as an object a to be operated next. In the case where there are two or more related objects a that are yet to be triggered, these two or more objects a are operated in order.

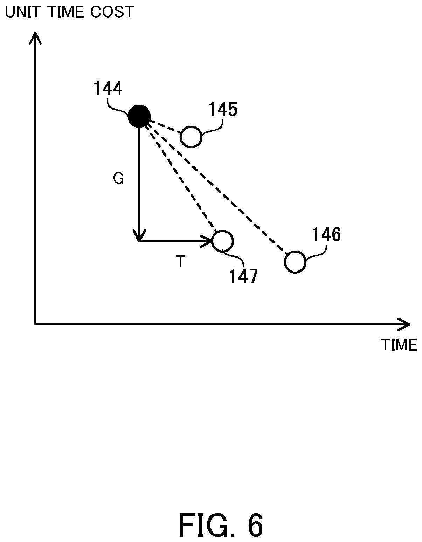

FIG. 6 illustrates an example of visualizing an index Z.

The above-described $Z_b$ corresponds to a downward slope (the value obtained by reversing the sign of the slope) on a two-dimensional plane where the horizontal axis represents time and the vertical axis represents the unit time cost of the system. The downward slope represents the average reduction in unit time cost per operation of an object a. To select the object b with the maximum $Z_b$ is equivalent to maximizing the average reduction.

For example, a point 144 represents the current time and the current unit time cost. A point 145 represents the triggering time of a certain object b to be triggered next and the unit time cost after the triggering. A point 146 represents the triggering time of an object b to be triggered next, different from the object b indicated by the point 145, and the unit time cost after the triggering. A point 147 represents the triggering time of an object b to be triggered next, different from the objects b indicated by the points 145 and 146, and the unit time cost after the triggering. Since triggering the objects b needs different numbers of objects a to be operated, the points 145 to 147 have different coordinates on the horizontal axis.

With respect to the object b indicated by the point 145, the number of objects a to be operated is small, and the reduction in the unit time cost is also small. With respect to the object b indicated by the point 146, the reduction in the unit time cost is large, but the number of objects a to be operated is large. With respect to the object b indicated by the point 147, there is a good balance between the number of objects a to be operated and the reduction in the unit time cost, and the point 147 has the maximum downward slope from the point 144. Therefore, the information processing apparatus 100 selects the object b indicated by the point 147.

Each time selecting one object b to be triggered next, the information processing apparatus 100 recalculates $Z_b$ for each remaining object b. At this time, the objects a that need to be operated to trigger the selected object b are regarded as being already triggered. The information processing apparatus 100 repeats a process of recalculating $Z_b$ for each object b that is yet to be triggered and selecting the object b with the maximum $Z_b$ until all objects b are triggered.

In this connection, there may be two or more objects b with the maximum $Z_b$. In this case, with respect to each of the two or more objects b, the information processing apparatus 100 continues to search for an operation sequence for the group A, tentatively selecting the object b. This means that the information processing apparatus 100 branches the search path for the operation sequence. In the case where the search path branches, the information processing apparatus 100 evaluates the created operation sequences in terms of the system cost in the middle of the search, and performs pruning by discarding search paths that are found to be less advantageous than other search paths.

As a result, one operation sequence finally remains for the group A. Note that the information processing apparatus 100 may prune search paths as needed so as not to create too many search path branches. For example, the information processing apparatus 100 may randomly discard a certain percentage of the search path branches or randomly discard a certain number of search path branches when the number of search path branches exceeds a threshold.

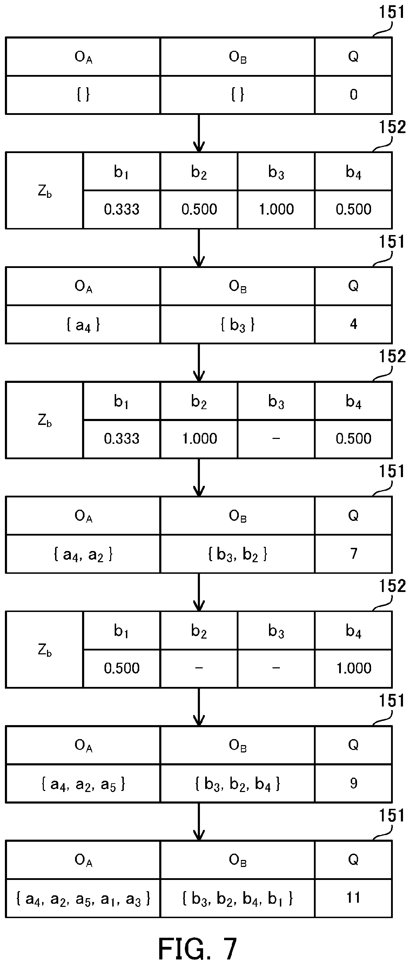

FIG. 7 illustrates a first example of schedule search.

A table 151 contains one or more records, each with $O_A$, $O_B$, and Q. In the case where the search path branches, the table 151 contains two or more records. $O_A$ is a permutation of objects a and indicates an operation sequence for the objects a. $O_B$ is a permutation of objects b and indicates a triggering sequence for the objects b. Q denotes the evaluation value of the operation sequence in the middle of search and is the cumulative unit time cost of the entire system from the start time to the current time. The lower Q is, the higher the evaluation of the operation sequence. A table 152 contains $Z_b$ calculated for each object b belonging to the group B.

With respect to the above-described graph 131, the information processing apparatus 100 initializes $Q_A$ to empty, $Q_B$ to empty, and Q to 0. The information processing apparatus 100 calculates $Z_b$ for each of the objects $b_1$ to $b_4$. $Z_b$ of the object $b_1$ is calculated as $1/3 = 0.333$, $Z_b$ of the object $b_2$ is calculated as $1/2 = 0.500$, $Z_b$ of the object $b_3$ is calculated as $1/1 = 1.000$, and $Z_b$ of the object $b_4$ is calculated as $1/2 = 0.500$.

The information processing apparatus 100 selects the object $b_3$ with the maximum $Z_b$, and then selects the object $a_4$ that needs to be operated in order to trigger the object $b_3$. The information processing apparatus 100 adds the object $b_3$ at the end of $Q_B$, and adds the object $a_4$ at the end of $O_A$. In addition, the information processing apparatus 100 detects that the unit time cost from the start time to the triggering time of the object $b_3$ is 4, and adds this unit time cost to Q.

After that, the information processing apparatus 100 recalculates $Z_b$ for each of the objects bi, $b_2$, and $b_4$. At this time, the objects $a_4$ and $b_3$ are regarded as being already triggered. $Z_b$ of the object $b_1$ is calculated as $1/3 = 0.333$, $Z_b$ of the object $b_2$ is calculated as $1/1 = 1.000$, and $Z_b$ of the object $b_4$ is calculated as $1/2 = 0.500$.

The information processing apparatus 100 selects the object $b_2$ with the maximum $Z_b$, and then selects the object $a_2$ that needs to be operated in order to trigger the object $b_2$. The information processing apparatus 100 adds the object $b_2$ at the end of $Q_B$, and adds the object $a_2$ at the end of $O_A$. In addition, the information processing apparatus 100 detects that the unit time cost from the triggering time of the object $b_3$ to the triggering time of the object $b_2$ is 3, and adds this unit time cost to Q.

After that, the information processing apparatus 100 recalculates $Z_b$ for each of the objects $b_1$ and $b_4$. At this time, the objects $a_2$, $a_4$, $b_2$, and $b_3$ are regarded as being already triggered. $Z_b$ of the object $b_1$ is calculated as $1/2 = 0.500$, and $Z_b$ of the object $b_4$ is calculated as $1/1 = 1.000$.

The information processing apparatus 100 selects the object $b_4$ with the maximum $Z_b$, and then selects the object as that needs to be operated in order to trigger the object $b_4$. The information processing apparatus 100 adds the object $b_4$ at the end of $Q_B$, and adds the object as at the end of $O_A$. In addition, the information processing apparatus 100 detects that the unit time cost from the triggering time of the object $b_2$ to the triggering time of the object $b_4$ is 2, and adds this unit time cost to Q.

Lastly, the information processing apparatus 100 selects the remaining object bi, and then selects the objects $a_1$ and as that need to be operated in order to trigger the object $b_1$. The information processing apparatus 100 adds the object $b_1$ at the end of $Q_B$, and adds the objects $a_1$ and $a_3$ at the end of $O_A$. In this connection, two or more objects a, when added to $O_A$, are arranged in descending order of their costs $C_a$. If there are objects a with the same cost $C_a$, they may be arranged in a random order.

In addition, the information processing apparatus 100 detects that the unit time costs in the temporal change from the triggering time of the object $b_4$ to the triggering time of the object $b_1$ are 1 and 1, and adds the sum of these unit time costs to Q. In the manner described above, the operation sequence for the group A is determined to be objects $a_4$, $a_2$, $a_5$, $a_1$, and $a_3$. The final Q corresponds to the estimated value of the system cost. Note that in the case where the triggering condition is AND and two or more objects b are triggered at the same time in response to the triggering of a certain object a, Q may fail to represent a correct system cost.

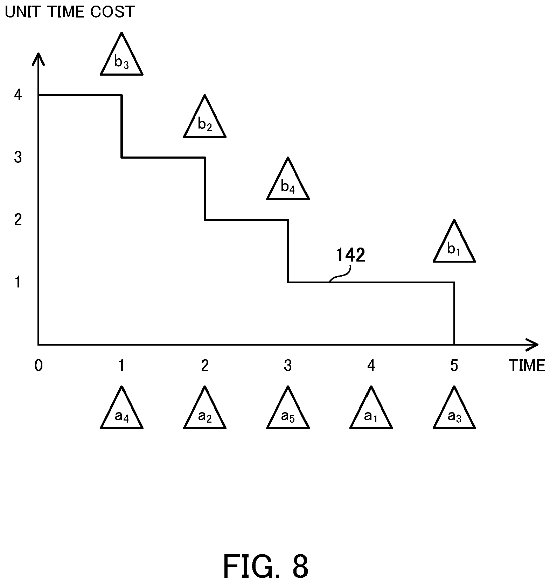

FIG. 8 illustrates a second example of a temporal change in unit time cost.

A curve 142 corresponds to the graph 131 and represents a change in unit time cost in the case where the triggering condition for the objects b is AND and the objects a are operated in the order of $a_4$, $a_2$, $a_5$, $a_1$, and $a_3$. At time 1, the object $a_4$ is triggered. At this point in time, the object $b_3$ is triggered, and the unit time cost decreases by 1. At time 2, the object $a_2$ is triggered. At this point in time, the object $b_2$ is triggered, and the unit time cost decreases by 1.

Then, at time 3, the object as is triggered. At this point in time, the object $b_4$ is triggered, and the unit time cost decreases by 1. At time 4, the object $a_1$ is triggered. At this point in time, the unit time cost does not change. Then, at time 5, the object $a_3$ is triggered. At this point in time, the object $b_1$ is triggered, and the unit time cost decreases by 1. In the case of the curve 141 illustrated in FIG. 4, the system cost is 16. On the other hand, in the case of the curve 142 illustrated in FIG. 8, the system cost is 11, lower than that of the curve 141.

The following describes schedule search in the case where the triggering condition is OR.

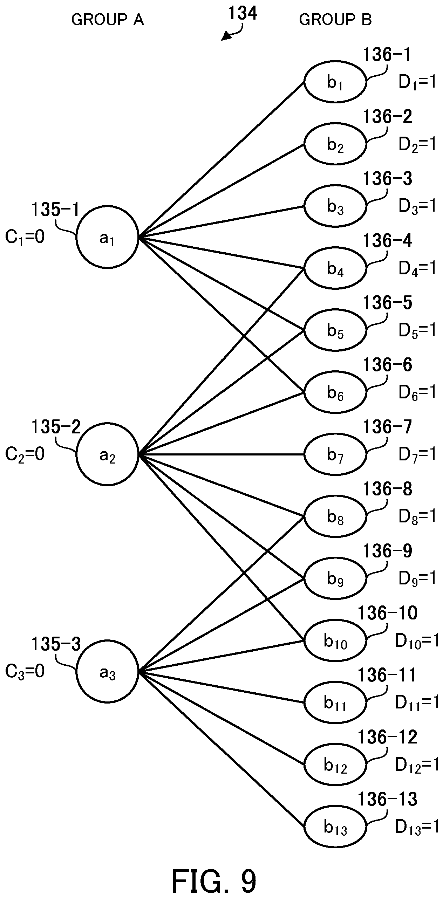

FIG. 9 illustrates a second example of a graph representing the relationships between objects.

The following describes schedule search under an OR condition with reference to the graph 134. The graph 134 includes nodes 135-1 to 135-3 and 136-1 to 136-13. The nodes 135-1 to 135-3 represent objects $a_1$ to $a_3$ belonging to a group A. The nodes 136-1 to 136-13 represent objects $b_1$ to $b_{13}$ belonging to a group B. Each of the objects $a_1$ to as has a cost $C_a$ of 0, and each of the objects $b_1$ to $b_{13}$ has a cost $D_b$ of 1. The objects $b_1$ to be are related to the object $a_1$. The objects $b_4$ to $b_{10}$ are related to the object $a_2$. The objects be to $b_{13}$ are related to the object $a_3$.

In the case where the triggering condition is AND, $Z_b$ is calculated for each object b. On the other hand, in the case where the triggering condition is OR, $Z_a$ is calculated for each object a. The information processing apparatus 100 calculates $Z_a$ of Equation (4) for each object a that is yet to be triggered. Here, b' denotes an object b that is yet to be triggered among the objects b related to the object a. Therefore, $Z_a$ is the sum of the cost $C_a$ of the object a and the costs $D_b$ of the objects b that are newly triggered in response to the triggering of the object a. That is, $Z_a$ denotes a reduction in the unit time cost of the entire system, caused by the triggering of the object a.

$$Z_a = C_a + \sum_{b' \in \{b | a \in A_b, \forall a' \in A_b, a' \notin R_A\}} D_{b'} \qquad (4)$$

The information processing apparatus 100 selects the object a with the maximum $Z_a$ as an object a to be operated next. The information processing apparatus 100 then selects the object b that is related to the selected object a and is yet to be triggered as an object b to be triggered next. Note that, in the case where there are two or more related objects b that are yet to be triggered, the two or more objects b are actually triggered at the same time. Therefore, these objects b may be arranged in a random order in the permutation.

Each time selecting one object a to be operated next, the information processing apparatus 100 recalculates $Z_a$ for each remaining object a. At this time, the objects b related to the selected object a are regarded as being already triggered. The information processing apparatus 100 repeats a process of recalculating $Z_a$ for each object a that is yet to be triggered and selecting the object a with the maximum $Z_a$ until all objects a are selected.

In this connection, there may be two or more objects a with the maximum $Z_a$. In this case, with respect to each of the two or more objects a, the information processing apparatus 100 continues to search for an operation sequence for the group A, tentatively selecting the object a. In the case where the information processing apparatus 100 branches the search path, the information processing apparatus 100 evaluates the created operation sequences in terms of the system cost in the middle of the search, and performs pruning by discarding search paths that are found to be less advantageous than other search paths, as in the case where the triggering condition is AND. Note that the information processing apparatus 100 may prune search paths as needed so as not to create too many search path branches.

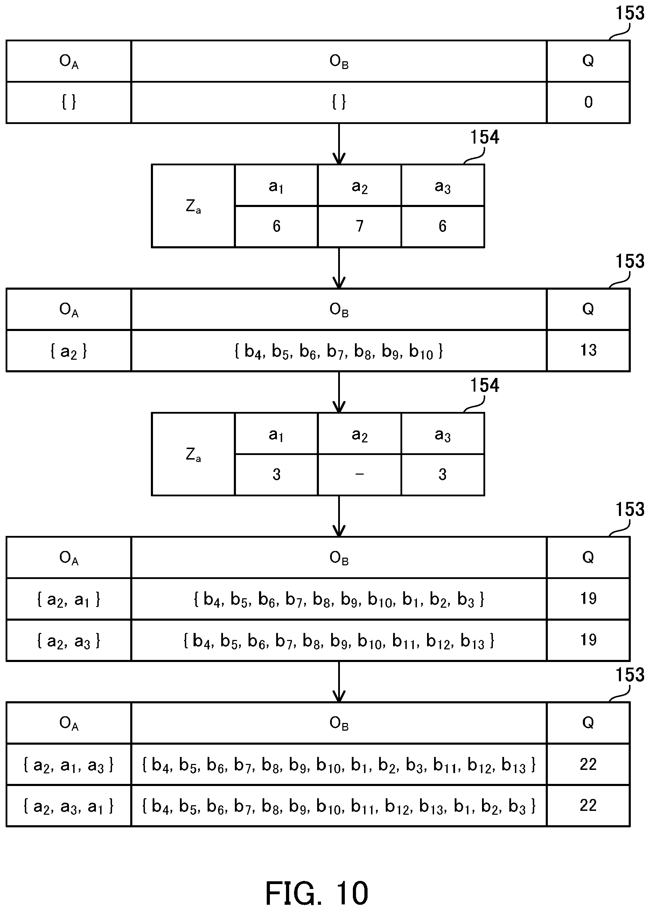

FIG. 10 illustrates a second example of schedule search.

A table 153 contains one or more records, each with $O_A$, $O_B$, and Q. In the case where the search path branches, the table 153 contains two or more records. A table 154 contains $Z_a$ calculated for each object a belonging to the group A.

With respect to the above-described graph 134, the information processing apparatus 100 initializes $Q_A$ to empty, $Q_B$ to empty, and Q to 0. The information processing apparatus 100 calculates $Z_a$ for each of the objects $a_1$ to $a_3$ included in the graph 134. $Z_a$ of the object $a_1$ is calculated as 6, $Z_a$ of the object $a_2$ is calculated as 7, and $Z_a$ of the object $b_3$ is calculated as 6.

The information processing apparatus 100 selects the object $a_2$ with the maximum $Z_a$, and then selects the objects $b_4$ to $b_{10}$ that are triggered in response to the triggering of the object $a_2$. The information processing apparatus 100 adds the object $a_2$ at the end of $O_A$, and adds the objects $b_4$ to bio at the end of $Q_B$. Here, the objects $b_4$ to $b_{10}$ may be arranged in any order in $Q_B$. In addition, the information processing apparatus 100 detects that the unit time cost from the start time to the triggering time of the object $a_2$ is 13, and adds this unit time cost to Q.

After that, the information processing apparatus 100 recalculates $Z_a$ for each of the objects $a_1$ and $a_3$. $Z_a$ of the object $a_1$ is calculated as 3, and $Z_a$ of the object as is calculated as 3. Here, both the objects $a_1$ and $a_3$ have the maximum $Z_a$. Therefore, the information processing apparatus 100 creates two records based on the record of the table 153.

The first record is about the case where the information processing apparatus 100 selects the object $a_1$ and also selects the objects $b_1$ to $b_3$ that are newly triggered in response to the triggering of the object $a_1$. The information processing apparatus 100 adds the object $a_1$ at the end of $O_A$ and adds the objects $b_1$ to $b_3$ at the end of $Q_B$. Here, the objects $b_1$ to $b_3$ may be arranged in any order in $Q_B$. In addition, the information processing apparatus 100 detects that the unit time cost from the triggering time of the object $a_2$ to the triggering time of the object $a_1$ is 6, and adds this unit time cost to Q.

The second record is about the case where the information processing apparatus 100 selects the object as and also selects the objects $b_{11}$ to $b_{13}$ that are newly triggered in response to the triggering of the object $a_3$. The information processing apparatus 100 adds the object $a_3$ at the end of $O_A$ and adds the objects $b_{11}$ to $b_{13}$ at the end of $Q_B$. Here, the objects $b_{11}$ to $b_{13}$ may be arranged in any order in $Q_B$. In addition, the information processing apparatus 100 detects that the unit time cost from the triggering time of the object $a_2$ to the triggering time of the object $a_3$ is 6, and adds this unit time cost to Q.

At this point in time, the two permutations $O_A$ have the same evaluation value Q, and there is no superiority or inferiority between the two permutations $O_A$. The information processing apparatus 100 therefore continues the search using the two permutations $O_A$.

For the first record, the information processing apparatus 100 selects the object $a_3$ and then selects the objects $b_{11}$ to $b_{13}$ that are newly triggered in response to the triggering of the object $a_3$. The information processing apparatus 100 adds the object $a_3$ at the end of $O_A$ and adds the objects $b_{11}$ to $b_{13}$ at the end of $Q_B$. Here, the objects $b_{11}$ to $b_{13}$ may be arranged in any order in $Q_B$. In addition, the information processing apparatus 100 detects that the unit time cost from the triggering time of the object $a_1$ to the triggering time of the object $a_3$ is 3, and adds this unit time cost to Q.

For the second record, the information processing apparatus 100 selects the object $a_1$ and then selects the objects $b_1$ to $b_3$ that are newly triggered in response to the triggering of the object $a_1$. The information processing apparatus 100 adds the object $a_1$ at the end of $O_A$ and adds the objects $b_1$ to $b_3$ at the end of $Q_B$. Here, the objects $b_1$ to $b_3$ may be arranged in any order in $Q_B$. In addition, the information processing apparatus 100 detects that the unit time cost from the triggering time of the object as to the triggering time of the object $a_1$ is 3, and adds this unit time cost to Q.

Even at the end time, the two permutations $O_A$ have the same evaluation value Q, and there is no superiority or inferiority between the two permutations $O_A$. Therefore, for example, the information processing apparatus 100 determines based on the first record that the operation sequence for the group A is a sequence of the objects $a_2$, ai, and $a_3$. The final Q corresponds to the system cost. Unlike the case where the triggering condition is AND, Q represents a correct system cost.

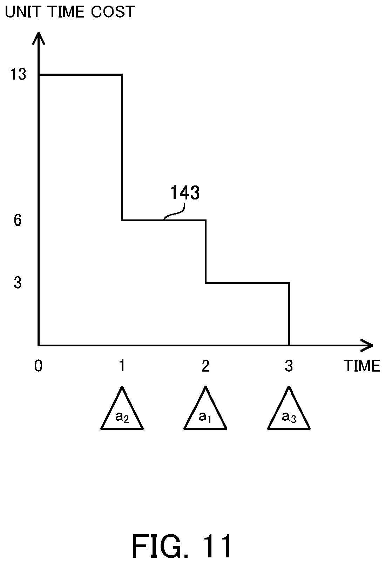

FIG. 11 illustrates a third example of a temporal change in unit time cost.

A curve 143 corresponds to the graph 134 and represents a change in unit time cost in the case where the triggering condition for the objects b is OR and the objects a are operated in the order of $a_2$, ai, and $a_3$. At time 1, the object $a_2$ is triggered. At this point in time, the objects $b_4$ to $b_{10}$ are triggered, and the unit time cost decreases by 7. At time 2, the object $a_1$ is triggered. At this point in time, the objects $b_1$ to $b_3$ are triggered, and the unit time cost decreases by 3. Then, at time 3, the object $a_3$ is triggered. At this point in time, the objects $b_{11}$ to $b_{13}$ are triggered, and the unit time cost decreases by 3. In the case of the curve 143, the system cost is 22.

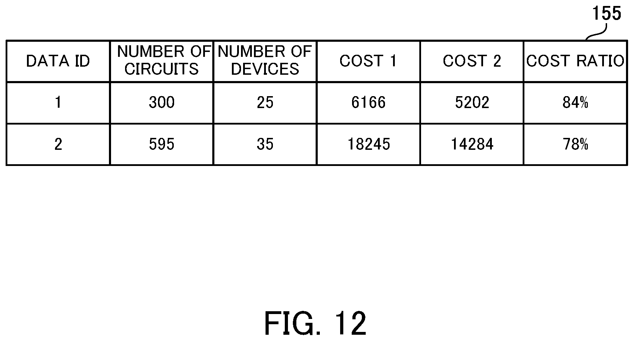

FIG. 12 illustrates examples of a system cost comparison.

A table 155 illustrates results of comparing the scheduling method under the AND condition described in the second embodiment with the heuristics taught in the aforementioned U.S. Patent Application Publication No. 2022/0094571. An optimization target system is a circuit-switched system including a plurality of circuits and a plurality of circuit switching devices.

A first comparison example relates to a system with 300 circuits and 25 circuit switching devices. With the heuristics taught in the aforementioned U.S. Patent Application Publication No. 2022/0094571, a schedule that provides a system cost of 6166 is created. With the scheduling method of the second embodiment, a schedule that provides a system cost of 5202 is created. A ratio of the latter system cost to the former system cost is approximately 84%, meaning that the second embodiment exhibits an improved optimization accuracy.

A second comparison example relates to a system with 595 circuits and 35 circuit switching devices. With the heuristics taught in the aforementioned U.S. Patent Application Publication No. 2022/0094571, a schedule that provides a system cost of 18245 is created. With the scheduling method of the second embodiment, a schedule that provides a system cost of 14284 is created. A ratio of the latter system cost to the former system cost is approximately 78%, meaning that the second embodiment exhibits an improved optimization accuracy.

The following describes the functions and processing procedures of the information processing apparatus 100.

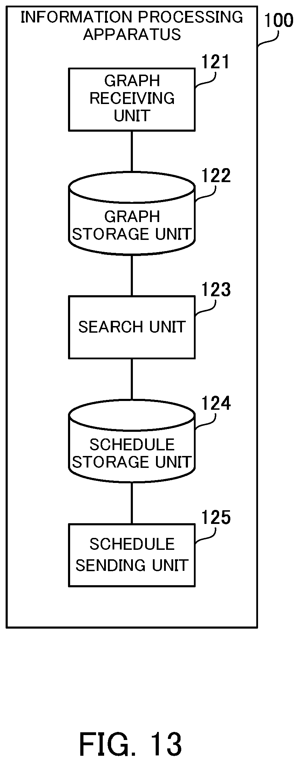

FIG. 13 illustrates an example of the functions of the information processing apparatus according to the second embodiment.

The information processing apparatus 100 includes a graph receiving unit 121, a graph storage unit 122, a search unit 123, a schedule storage unit 124, and a schedule sending unit 125. The graph storage unit 122 and schedule storage unit 124 are implemented by using, for example, the RAM 102 or HDD 103. The graph receiving unit 121 and schedule sending unit 125 are implemented by using, for example, the CPU 101, communication interface 107, and programs. The search unit 123 is implemented by using, for example, the CPU 101 and programs.

The graph receiving unit 121 receives graph data representing a bipartite graph such as the graph 131 or 134. The graph data includes a plurality of nodes representing objects and a plurality of edges connecting the plurality of nodes. In addition, the graph data includes costs that are respectively assigned to the nodes. In addition, the graph data includes a flag indicating whether the triggering condition is AND or OR. For example, the graph data is generated by the user so as to represent an optimization target system. The graph receiving unit 121 may accept the graph data from the user or may receive the graph data from another information processing apparatus. The graph receiving unit 121 may provide a user interface to assist the user in generating the graph data.

The graph storage unit 122 stores the graph data received by the graph receiving unit 121. The search unit 123 executes a scheduling algorithm under AND relationship or a scheduling algorithm under OR relationship, which will be described later, depending on the flag included in the graph data. The search unit 123 generates schedule data and stores it in the schedule storage unit 124. The schedule data represents an operation sequence for the objects belonging to the group A indicated in the graph data, and a system cost that is the cumulative unit time cost from the start time to the end time.

The schedule storage unit 124 stores the schedule data generated by the search unit 123. The schedule sending unit 125 outputs the generated schedule data. The schedule sending unit 125 may display the schedule data on the display device 111 or may send the schedule data to another information processing apparatus.

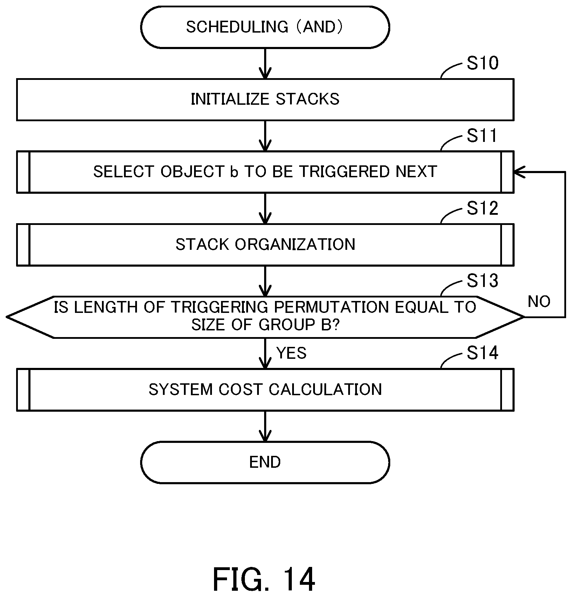

FIG. 14 is a flowchart illustrating an example of a procedure for scheduling under AND relationship.

S10: The search unit 123 sets aside two storage regions: "stack 1" and "stack 2." The search unit 123 creates a record ($O_A = \{\}$, $O_B = \{\}$, Q = 0) for the initial state and stores the record in the stack 1. This initializes the stacks 1 and 2.

S11: The search unit 123 selects an object b to be triggered next from the group B. At this time, two or more candidates may be selected. A record indicating the result of selecting the object b is stored in the stack 2. A procedure for the object selection will be described later.

S12: The search unit 123 organizes the records stored in the stack 2 and moves records that need to be kept to the stack 1. At this time, the search unit 123 may delete records that each indicate a permutation of objects b that is less advantageous than other records, or may randomly delete some records for adjusting the number of records. A procedure for the stack organization will be described later.

S13: The search unit 123 determines whether the length of the permutation representing the triggering sequence for the objects b is equal to the size of the group B (the number of objects b included in the group B). If the length of the permutation is equal to the size of the group B, the process proceeds to step S14. If the length of the permutation is less than the size of the group B, the process proceeds back to step S11.

S14: At this point in time, only one record is stored in the stack 1. The search unit 123 calculates a system cost based on the operation sequence for the objects a indicated in the stored record. A procedure for the system cost calculation will be described later.

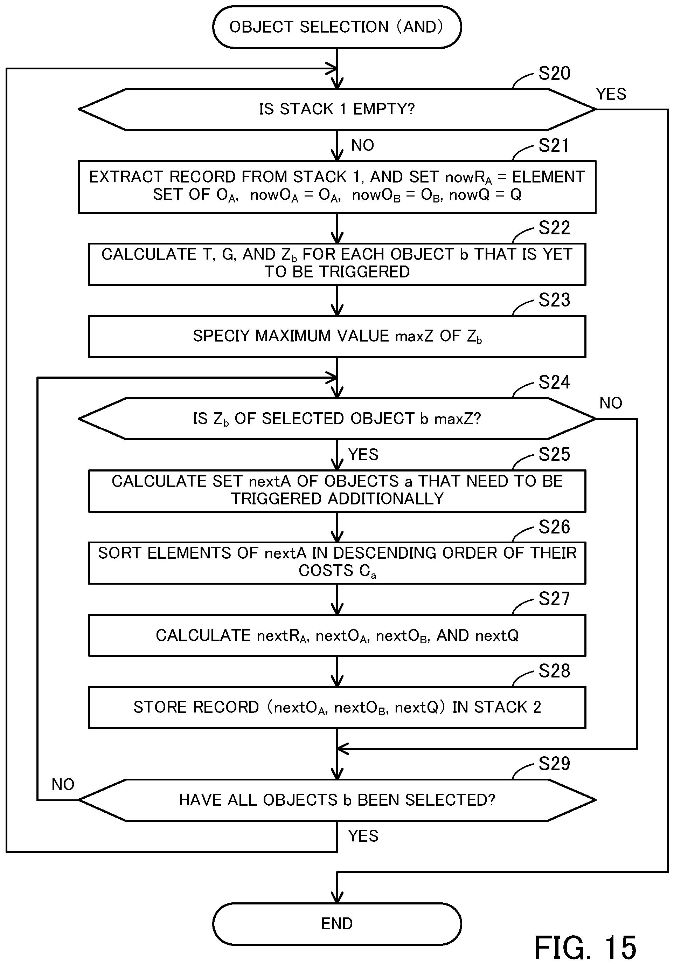

FIG. 15 is a flowchart illustrating an example of a procedure for object selection under AND relationship.

The object selection under AND relationship is performed at above-described step S11.

S20: The search unit 123 determines whether the stack 1 is empty. If the stack 1 is empty, the object selection is completed. If the stack 1 is not empty, the process proceeds to step S21.

S21: The search unit 123 extracts one record from the stack 1 and then extracts $O_A$, $O_B$, and Q from the record. The search unit 123 sets $nowR_A$ equal to the set of elements included in the extracted $O_A$, $nowO_A$ equal to the extracted $O_A$, $nowO_B$ equal to the extracted $O_B$, and nowQ equal to the extracted Q.

S22: The search unit 123 calculates, for each object b that is yet to be triggered, T of Equation (1) and G of Equation (2), and then calculates $Z_b$ of Equation (3) using the calculated T and G.

S23: The search unit 123 specifies the maximum value maxZ among the values $Z_b$ of the objects b that are yet to be triggered, calculated at step S22.

S24: The search unit 123 selects one object b that is yet to be triggered. The search unit 123 determines whether $Z_b$ of the selected object b is maxZ specified at step S23. If $Z_b$ is maxZ, the process proceeds to step S25. If $Z_b$ is lower than maxZ, the process proceeds to step S29.

S25: The search unit 123 calculates a set nextA of objects a that need to be triggered additionally in order to trigger the object b, with Equation (5).

$$nextA = A_b \cap \overline{nowR_A} \qquad (5)$$

S26: The search unit 123 sorts the elements of nextA in descending order of their costs $C_a$.

S27: The search unit 123 adds the elements of nextA to $nowR_A$, and calculates $nextR_A$. In addition, the search unit 123 adds a string of elements sorted at step S26 at the end of $nowO_A$, and calculates $nextO_A$. In addition, the search unit 123 adds the selected object b at the end of $nowO_B$, and calculates $nextO_B$.

In addition, the search unit 123 calculates nextQ with Equation (6). In Equation (6), $na_j$ denotes the j-th element of the element string sorted at step S26, and $C(na_j)$ denotes the cost of the object $na_j$. The second term of the right side is the sum of the costs of the objects a that are yet to be triggered. The third term of the right side is the stepwise sum of the unit time costs of the objects a that are triggered this time. The fourth term of the right side is the sum of the costs of the objects b that are yet to be triggered.

$$nextQ = nowQ + T \sum_{a \in \overline{nextR_A}} C_a + \sum_{j=1}^{k} j \times C(na_j) + T \sum_{b' \in \overline{nowD_b}} D_{b'} \quad (6)$$

S28: The search unit 123 creates a record (nextO$_A$, nextO$_B$, nextQ) and stores the created record in the stack 2.

S29: The search unit 123 determines whether all objects b that are yet to be triggered have been selected at step S24. If all the objects b have been selected, the process proceeds back to step S20. Otherwise, the process proceeds back to step S24.

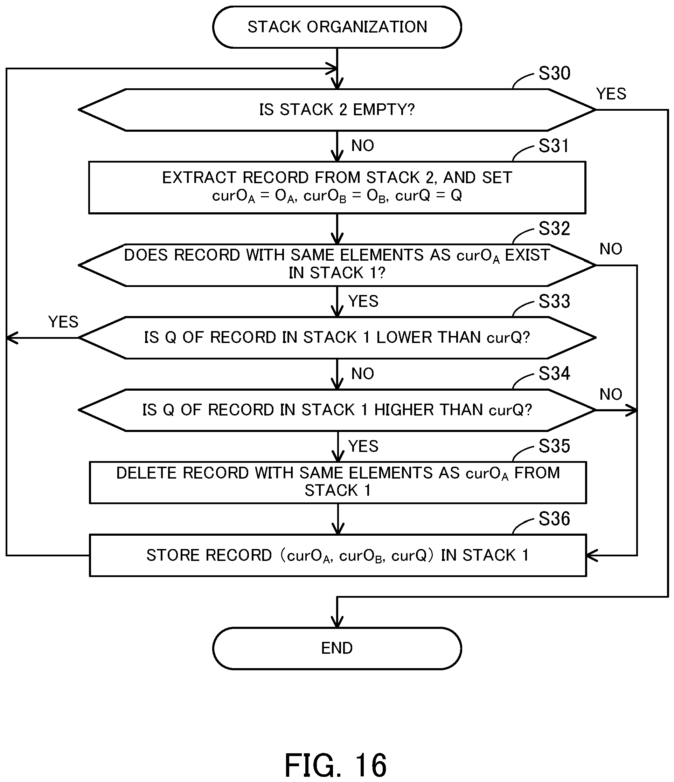

FIG. 16 is a flowchart illustrating an example of a procedure for stack organization.

The stack organization is performed at above-described step S12.

S30: The search unit 123 determines whether the stack 2 is empty. If the stack 2 is empty, the stack organization is completed. If the stack 2 is not empty, the process proceeds to step S31.

S31: The search unit 123 extracts one record from the stack 2 and then extracts O$_A$, O$_B$, and Q from the record. The search unit 123 sets curO$_A$ equal to the extracted O$_A$, curO$_B$ equal to the extracted O$_B$, and curQ equal to the extracted Q.

S32: The search unit 123 determines whether a record with O$_A$ including all elements included in curO$_A$ exists in the stack 1. If such a record exists in the stack 1, the process proceeds to step S33. Otherwise, the process proceeds to step S36.

S33: The search unit 123 determines whether Q of the record found at step S32 is lower than curQ. If Q is lower than curQ, the process proceeds back to step S30. If Q is higher than or equal to curQ, the process proceeds to step S34.

S34: The search unit 123 determines whether Q of the record found at step S32 is higher than curQ. If Q is higher than curQ, the process proceeds to step S35. If Q is equal to curQ, the process proceeds to step S36.

S35: The search unit 123 deletes the record found at step S32 from the stack 1.

S36: The search unit 123 creates a record (curO$_A$, curO$_B$, curQ) and stores the created record in the stack 1. Then, the process proceeds back to step S30.

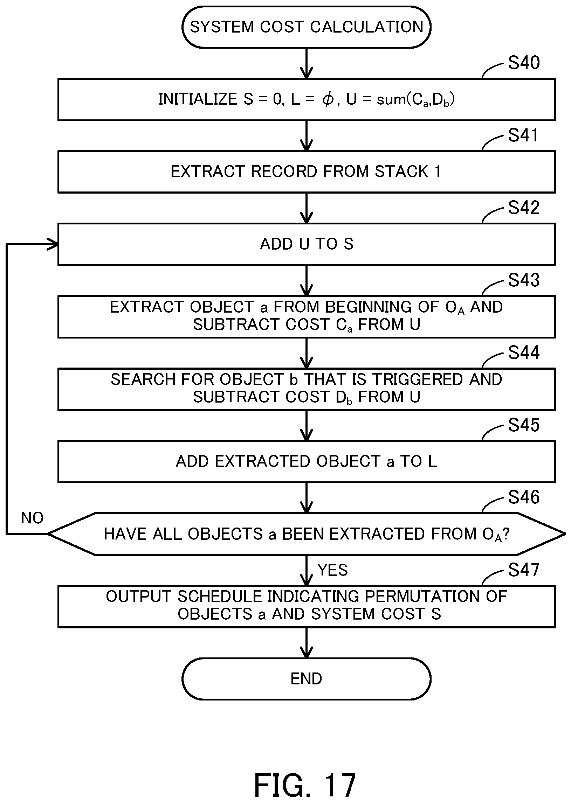

FIG. 17 is a flowchart illustrating an example of a procedure for system cost calculation.

S40: The search unit 123 initializes S to 0, and L to an empty set. In addition, the search unit 123 initializes U as in Equation (7). Here, the initialization value of U is the sum of the costs C$_a$ of all objects a and the costs D$_b$ of all objects b.

$$U = \sum_a C_a + \sum_b D_b \quad (7)$$

S41: The search unit 123 extracts a record from the stack 1 and extracts O$_A$ from the record. At the start of the system cost calculation, only one record exists in the stack 1.

S42: The search unit 123 adds U to S.

S43: The search unit 123 extracts one object a from the beginning of O$_A$, and subtracts the cost C$_a$ of the extracted object a from U.

S44: The search unit 123 searches for an object b that is triggered in response to the triggering of the object a extracted at step S43. If such an object b to be triggered is found, the search unit 123 subtracts the cost D$_b$ of the object b to be triggered from U.

S45: The search unit 123 adds the extracted object a at the end of L.

S46: The search unit 123 determines whether all objects a have been extracted from O$_A$. If all the objects a have been extracted, the process proceeds to step S47. Otherwise, the process proceeds back to step S42.

S47: The search unit 123 generates schedule data indicating the permutation L representing the operation sequence for the objects a, and the system cost S, and outputs the schedule data.

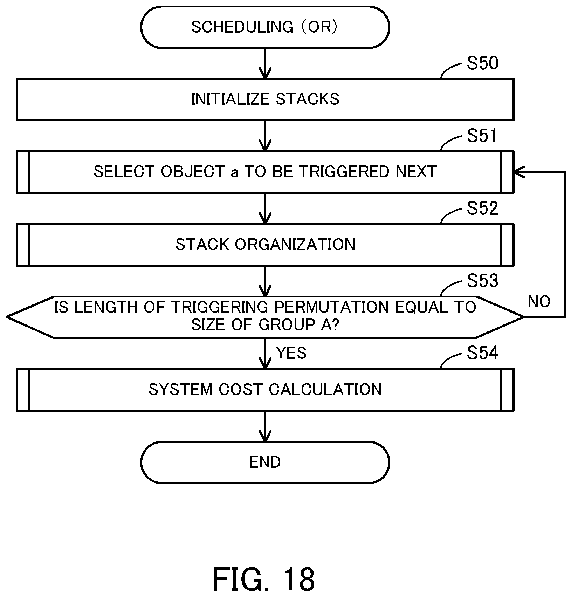

FIG. 18 is a flowchart illustrating an example of a procedure for scheduling under OR relationship.

S50: The search unit 123 sets aside two storage regions: "stack 1" and "stack 2." The search unit 123 creates a record (O$_A$ = { }, O$_B$ = { }, Q = 0) for the initial state and stores the record in the stack 1. This initializes the stacks 1 and 2.

S51: The search unit 123 selects an object a to be triggered next from the group A. At this time, two or more candidates may be selected. A record indicating the result of selecting the object a is stored in the stack 2. A procedure for the object selection will be described later.

S52: The search unit 123 organizes the records stored in the stack 2 and moves records that need to be kept to the stack 1. At this time, the search unit 123 may delete records that each indicate a permutation of objects a that is less advantageous than other records, or may randomly delete some records for adjusting the number of records. A procedure for the stack organization is the same as described in FIG. 16.

S53: The search unit 123 determines whether the length of the permutation representing the triggering sequence for the objects a is equal to the size of the group A (the number of objects a included in the group A). If the length of the permutation is equal to the size of the group A, the process proceeds to step S54. If the length of the permutation is less than the size of the group A, the process proceeds back to step S51.

S54: At this point in time, only one record is stored in the stack 1. The search unit 123 calculates a system cost based on the operation sequence for the objects a indicated in the stored record. A procedure for the system cost calculation is the same as described in FIG. 17. Note that the search unit 123 may use Q included in the record as the system cost S.

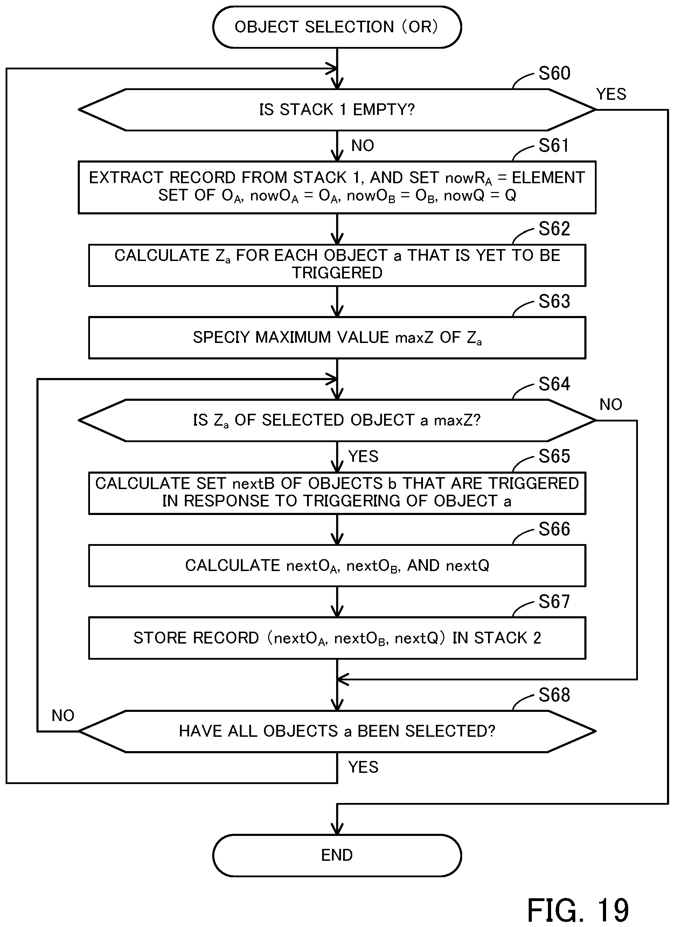

FIG. 19 is a flowchart illustrating an example of a procedure for object selection under OR relationship.

The object selection under OR relationship is executed at above-described step S51.

S60: The search unit 123 determines whether the stack 1 is empty. If the stack 1 is empty, the object selection is completed. If the stack 1 is not empty, the process proceeds to step S61.

S61: The search unit 123 extracts one record from the stack 1 and then extracts $O_A$, $O_B$, and Q from the record. The search unit 123 sets $nowR_A$ equal to the set of elements included in the extracted $O_A$, $nowO_A$ equal to the extracted $O_A$, $nowO_B$ equal to the extracted $O_B$, and $nowQ$ equal to the extracted Q.

S62: The search unit 123 calculates $Z_a$ of Equation (4) for each object a that is yet to be triggered.

S63: The search unit 123 specifies the maximum value maxZ among the values $Z_a$ of the objects a that are yet to be triggered, calculated at step S62.

S64: The search unit 123 selects one object a that is yet to be triggered. The search unit 123 determines whether $Z_a$ of the selected object a is maxZ specified at step S63. If $Z_a$ is maxZ, the process proceeds to step S65. If $Z_a$ is lower than maxZ, the process proceeds to step S68.

S65: The search unit 123 calculates a set nextB of objects b that are newly triggered in response to the triggering of the selected object a. The set nextB is such a set of objects b that are not included in $nowO_B$ and that $A_b$ includes the above object a.

S66: The search unit 123 adds the selected object a at the end of $nowO_A$ and calculates $nextO_A$. In addition, the search unit 123 adds nextB at the end of $nowO_B$ and calculates nextOs. Here, the objects b may be arranged in any order.

In addition, the search unit 123 calculates nextQ with Equation (8). In Equation (8), the second term of the right side is the sum of the costs of the objects a that are yet to be triggered at the point in time before the object a selected at step S64 is triggered. The third term of the right side is the sum of the costs of the objects b that are yet to be triggered at the point in time before the object a selected at step S64 is triggered.

$$nextQ = nowQ + \sum_{a \in nowR_A} C_a + \sum_{b' \in nowO_B} D_{b'} \qquad (8)$$

S67: The search unit 123 creates a record ($nextO_A$, $nextO_B$, nextQ) and stores the created record in the stack 2.

S68: The search unit 123 determines whether all objects a that are yet to be triggered have been selected at step S64. If all the objects a have been selected, the process proceeds back to step S60. Otherwise, the process proceeds to step S64.

As described above, the information processing apparatus 100 of the second embodiment generates schedule data representing an operation sequence for the objects a of the group A on the basis of the graph data obtained by modeling a system. At this time, the information processing apparatus 100 searches for the operation sequence that achieves a reduced system cost in the transition period during which all objects b of the group B undergo a state change. This results in generating highly efficient, useful schedule data.

The information processing apparatus 100 is able to apply the algorithm described in the second embodiment to network equipment shutdown problems, factory equipment shutdown problems, factory equipment re-startup problems, and other various optimization problems. In addition, the information processing apparatus 100 searches for an operation sequence for the objects a using an algorithm that differs between the case where a condition to cause the state change in the objects b is AND and the case where the condition is OR. This allows for the generation of appropriate schedule data that meets the system requirement.

In the case of the AND condition, the information processing apparatus 100 calculates the index value $Z_b$ for each object b, and determines the operation sequence for the objects a such that the object b with the maximum $Z_b$ undergoes the state change next. The index value $Z_b$ is inversely proportional to the number of objects a that need to be operated in order to cause the state change in the object b, and is proportional to the reduction in the unit time cost caused by the operation. Thus, the efficiency of the operation is evaluated, and the optimization accuracy is improved.

In the case of the OR condition, the information processing apparatus 100 calculates the index value $Z_a$ for each object a, and determines the operation sequence such that the object a with the maximum $Z_a$ is operated next. The index

value $Z_a$ denotes the reduction in the unit time cost caused by operating the object a. Thus, the efficiency of the operation is evaluated, and the optimization accuracy is improved.

In addition, in the case where there are two or more objects with the maximum index value, the information processing apparatus 100 searches for a subsequent operation sequence for each of the two or more objects, and narrows down the operation sequence candidates on the basis of the superiority or inferiority of the subsequent operation sequences. This reduces the risk of failing to detect a preferable operation sequence that is more advantageous than other operation sequences in the late stage of the search. In addition, if there are many candidate branches, the information processing apparatus 100 randomly discards candidates. This ensures that schedule data is generated within a realistic computation time and with a computational load.

In one aspect, a highly efficient schedule is created.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A computer program that causes a computer to perform a process comprising:

   obtaining system data (13) representing a system including a plurality of first objects (14-1 to 14-4) that each undergo a first state change in response to an operation and a plurality of second objects (15-1 to 15-3) that are each related to one or more first objects among the plurality of first objects and that each undergo a second state change in response to the first state change of the one or more first objects related thereto, the system data assigning each of the plurality of second objects a cost (D) that changes in response to the second state change;
   determining, for each of the plurality of second objects, based on the system data, a number of unchanged first objects that are yet to undergo the first state change among the one or more first objects related thereto, and a change in total cost defined for the system using costs of the plurality of second objects, the change in the total cost being caused by performing the operation on the unchanged first objects, and determining, for the each of the plurality of second objects, an index value (16-1 to 16-3) that increases as the number of unchanged first objects decreases and increases as the change in the total cost increases; and
   generating schedule data (17) representing a sequence in which the operation is to be performed on the plurality of first objects such that the plurality of second objects undergo the second state change preferentially in descending order of the index value.

2. The computer program according to claim 1, wherein the generating includes, each time selecting one second object ($b_3$) that undergoes the second state change from the plurality of second objects, redetermining the index value ($Z_b$) for each second object (bi, $b_2$, $b_4$) that has not been selected among the plurality of second objects.

3. The computer program according to claim 2, wherein, in response to an identical index value ($Z_b$) being determined for two or more second objects, the generating includes generating two or more patterns each representing a result of selecting a different one of the two or more second objects and redetermining the index value for each second object that has not been selected, and determining, based on a comparison of the two or more patterns, in what order the two or more second objects undergo the second state change (S28, S33 to S36).

4. The computer program according to any of the preceding claims, wherein

   the system data further assigns each of the plurality of first objects (132-1 to 132-5) an other cost ($C_a$), and
   the total cost is defined further using the other cost.

5. The computer program according to any of the preceding claims, wherein the index value ($Z_b$) is determined by dividing the change (G) in the total cost by the number (T) of unchanged first objects.

6. A scheduling method executed by a computer, the scheduling method comprising:

obtaining system data (13) representing a system including a plurality of first objects (14-1 to 14-4) that each undergo a first state change in response to an operation and a plurality of second objects (15-1 to 15-3) that are each related to one or more first objects among the plurality of first objects and that each undergo a second state change in response to the first state change of the one or more first objects related thereto, the system data assigning each of the plurality of second objects a cost (D) that changes in response to the second state change; determining, for each of the plurality of second objects, based on the system data, a number of unchanged first objects that are yet to undergo the first state change among the one or more first objects related thereto, and a change in total cost defined for the system using costs of the plurality of second objects, the change in the total cost being caused by performing the operation on the unchanged first objects, and determining, for the each of the plurality of second objects, an index value (16-1 to 16-3) that increases as the number of unchanged first objects decreases and increases as the change in the total cost increases; and generating schedule data (17) representing a sequence in which the operation is to be performed on the plurality of first objects such that the plurality of second objects undergo the second state change preferentially in descending order of the index value.

7. An information processing apparatus comprising:

storage means (11) for storing system data (13) representing a system including a plurality of first objects (14-1 to 14-4) that each undergo a first state change in response to an operation and a plurality of second objects (15-1 to 15-3) that are each related to one or more first objects among the plurality of first objects and that each undergo a second state change in response to the first state change of the one or more first objects related thereto, the system data assigning each of the plurality of second objects a cost (D) that changes in response to the second state change; and processing means (12) for

determining, for each of the plurality of second objects, based on the system data, a number of unchanged first objects that are yet to undergo the first state change among the one or more first objects related thereto, and a change in total cost defined for the system using costs of the plurality of second objects, the change in the total cost being caused by performing the operation on the unchanged first objects, and determining, for the each of the plurality of second objects, an index value (16-1 to 16-3) that increases as the number of unchanged first objects decreases and increases as the change in the total cost increases, and generating schedule data (17) representing a sequence in which the operation is to be performed on the plurality of first objects such that the plurality of second objects undergo the second state change preferentially in descending order of the index value.

INFORMATION PROCESSING APPARATUS 10

STORAGE UNIT 11

SYSTEM DATA 13

| OBJECT | $b_1$ | $b_2$ | $b_3$ |
|---|---|---|---|
| INDEX VALUE | 1/3 | 1/2 | 1/1 |

SCHEDULE DATA 17

| OBJECTS | { $a_4$, $a_2$, $a_1$, $a_3$ } |
|---|---|

PROCESSING UNIT 12

FIG. 1

INFORMATION PROCESSING APPARATUS    100

| CPU | 101 |
| RAM | 102 |
| HDD | 103 |

| GPU | 104 |
| INPUT INTERFACE | 105 |
| MEDIA READER | 106 |
| COMMUNI-CATION INTERFACE | 107 |

DISPLAY DEVICE    111

INPUT DEVICE    112

STORAGE MEDIUM    113

NETWORK    114

BUS

# FIG. 2

FIG. 3

FIG. 4

FIG. 5

UNIT TIME COST

FIG. 6

151

| $O_A$ | $O_B$ | Q |
|---|---|---|
| { } | { } | 0 |

152

| $Z_b$ | $b_1$ | $b_2$ | $b_3$ | $b_4$ |
|---|---|---|---|---|
| | 0.333 | 0.500 | 1.000 | 0.500 |

151

| $O_A$ | $O_B$ | Q |
|---|---|---|
| { $a_4$ } | { $b_3$ } | 4 |

152

| $Z_b$ | $b_1$ | $b_2$ | $b_3$ | $b_4$ |
|---|---|---|---|---|
| | 0.333 | 1.000 | – | 0.500 |

151

| $O_A$ | $O_B$ | Q |
|---|---|---|
| { $a_4$, $a_2$ } | { $b_3$, $b_2$ } | 7 |

152

| $Z_b$ | $b_1$ | $b_2$ | $b_3$ | $b_4$ |
|---|---|---|---|---|
| | 0.500 | – | – | 1.000 |

151

| $O_A$ | $O_B$ | Q |
|---|---|---|
| { $a_4$, $a_2$, $a_5$ } | { $b_3$, $b_2$, $b_4$ } | 9 |

151

| $O_A$ | $O_B$ | Q |
|---|---|---|
| { $a_4$, $a_2$, $a_5$, $a_1$, $a_3$ } | { $b_3$, $b_2$, $b_4$, $b_1$ } | 11 |

FIG. 7

FIG. 8

FIG. 9

153

| $O_A$ | $O_B$ | Q |
|---|---|---|
| { } | { } | 0 |

154

| $Z_a$ | $a_1$ | $a_2$ | $a_3$ |
|---|---|---|---|
| | 6 | 7 | 6 |

153

| $O_A$ | $O_B$ | Q |
|---|---|---|
| { $a_2$ } | { $b_4$, $b_5$, $b_6$, $b_7$, $b_8$, $b_9$, $b_{10}$ } | 13 |

154

| $Z_a$ | $a_1$ | $a_2$ | $a_3$ |
|---|---|---|---|
| | 3 | — | 3 |

153

| $O_A$ | $O_B$ | Q |
|---|---|---|
| { $a_2$, $a_1$ } | { $b_4$, $b_5$, $b_6$, $b_7$, $b_8$, $b_9$, $b_{10}$, $b_1$, $b_2$, $b_3$ } | 19 |
| { $a_2$, $a_3$ } | { $b_4$, $b_5$, $b_6$, $b_7$, $b_8$, $b_9$, $b_{10}$, $b_{11}$, $b_{12}$, $b_{13}$ } | 19 |

153

| $O_A$ | $O_B$ | Q |
|---|---|---|
| { $a_2$, $a_1$, $a_3$ } | { $b_4$, $b_5$, $b_6$, $b_7$, $b_8$, $b_9$, $b_{10}$, $b_1$, $b_2$, $b_3$, $b_{11}$, $b_{12}$, $b_{13}$ } | 22 |
| { $a_2$, $a_3$, $a_1$ } | { $b_4$, $b_5$, $b_6$, $b_7$, $b_8$, $b_9$, $b_{10}$, $b_{11}$, $b_{12}$, $b_{13}$, $b_1$, $b_2$, $b_3$ } | 22 |

FIG. 10

UNIT TIME COST

143

FIG. 11

155

| DATA ID | NUMBER OF CIRCUITS | NUMBER OF DEVICES | COST 1 | COST 2 | COST RATIO |
|---------|--------------------|--------------------|--------|--------|------------|
| 1 | 300 | 25 | 6166 | 5202 | 84% |
| 2 | 595 | 35 | 18245 | 14284 | 78% |

# FIG. 12

INFORMATION PROCESSING APPARATUS  100

GRAPH RECEIVING UNIT  121

GRAPH STORAGE UNIT  122

SEARCH UNIT  123

SCHEDULE STORAGE UNIT  124

SCHEDULE SENDING UNIT  125

# FIG. 13

SCHEDULING (AND)

S10

INITIALIZE STACKS

S11

SELECT OBJECT b TO BE TRIGGERED NEXT

S12

STACK ORGANIZATION

S13

IS LENGTH OF TRIGGERING PERMUTATION EQUAL TO SIZE OF GROUP B?

NO

YES

S14

SYSTEM COST CALCULATION

END

# FIG. 14

OBJECT SELECTION (AND)

S20
IS STACK 1 EMPTY? — YES

NO — S21
EXTRACT RECORD FROM STACK 1, AND SET $nowR_A$ = ELEMENT SET OF $O_A$, $nowO_A = O_A$, $nowO_B = O_B$, $nowQ = Q$

S22
CALCULATE T, G, AND $Z_b$ FOR EACH OBJECT b THAT IS YET TO BE TRIGGERED

S23
SPECIY MAXIMUM VALUE maxZ OF $Z_b$

S24
IS $Z_b$ OF SELECTED OBJECT b maxZ? — NO

YES — S25
CALCULATE SET nextA OF OBJECTS a THAT NEED TO BE TRIGGERED ADDITIONALLY

S26
SORT ELEMENTS OF nextA IN DESCENDING ORDER OF THEIR COSTS $C_a$

S27
CALCULATE $nextR_A$, $nextO_A$, $nextO_B$, AND nextQ

S28
STORE RECORD ($nextO_A$, $nextO_B$, nextQ) IN STACK 2

S29
HAVE ALL OBJECTS b BEEN SELECTED? — NO

YES

END

FIG. 15

STACK ORGANIZATION

S30

IS STACK 2 EMPTY? — YES

NO — S31

EXTRACT RECORD FROM STACK 2, AND SET
$curO_A = O_A$, $curO_B = O_B$, $curQ = Q$

S32

DOES RECORD WITH SAME ELEMENTS AS $curO_A$ EXIST
IN STACK 1? — NO

YES — S33

YES — IS Q OF RECORD IN STACK 1 LOWER THAN $curQ$?

NO — S34

IS Q OF RECORD IN STACK 1 HIGHER THAN $curQ$? — NO

YES — S35

DELETE RECORD WITH SAME ELEMENTS AS $curO_A$ FROM
STACK 1

S36

STORE RECORD ($curO_A$, $curO_B$, $curQ$) IN STACK 1

END

FIG. 16

SYSTEM COST CALCULATION

INITIALIZE S = 0, L = $\phi$, U = sum($C_a$,$D_b$) $\quad$ S40

EXTRACT RECORD FROM STACK 1 $\quad$ S41

ADD U TO S $\quad$ S42

EXTRACT OBJECT a FROM BEGINNING OF $O_A$ AND SUBTRACT COST $C_a$ FROM U $\quad$ S43

SEARCH FOR OBJECT b THAT IS TRIGGERED AND SUBTRACT COST $D_b$ FROM U $\quad$ S44

ADD EXTRACTED OBJECT a TO L $\quad$ S45

NO $\quad$ HAVE ALL OBJECTS a BEEN EXTRACTED FROM $O_A$? $\quad$ S46

YES $\quad$ S47

OUTPUT SCHEDULE INDICATING PERMUTATION OF OBJECTS a AND SYSTEM COST S

END

# FIG. 17

SCHEDULING (OR)

↓ S50

INITIALIZE STACKS

↓ S51

SELECT OBJECT a TO BE TRIGGERED NEXT

↓ S52

STACK ORGANIZATION

↓ S53

IS LENGTH OF TRIGGERING PERMUTATION EQUAL TO SIZE OF GROUP A? — NO

↓ YES — S54

SYSTEM COST CALCULATION

↓

END

FIG. 18

OBJECT SELECTION (OR)

IS STACK 1 EMPTY? — S60

YES

NO — S61

EXTRACT RECORD FROM STACK 1, AND SET $nowR_A$ = ELEMENT SET OF $O_A$, $nowO_A = O_A$, $nowO_B = O_B$, $nowQ = Q$

S62

CALCULATE $Z_a$ FOR EACH OBJECT a THAT IS YET TO BE TRIGGERED

S63

SPECIY MAXIMUM VALUE maxZ OF $Z_a$

S64

IS $Z_a$ OF SELECTED OBJECT a maxZ?

NO

YES — S65

CALCULATE SET nextB OF OBJECTS b THAT ARE TRIGGERED IN RESPONSE TO TRIGGERING OF OBJECT a

S66

CALCULATE $nextO_A$, $nextO_B$, AND nextQ

S67

STORE RECORD ($nextO_A$, $nextO_B$, nextQ) IN STACK 2

S68

HAVE ALL OBJECTS a BEEN SELECTED?

NO

YES

END

FIG. 19

Europäisches
Patentamt

European
Patent Office

Office européen
des brevets

# EUROPEAN SEARCH REPORT

| Application Number |
| --- |
| EP 24 19 2946 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2022/094571 A1 (WANG XI [US] ET AL) 24 March 2022 (2022-03-24) * paragraph [0034] - paragraph [0064]; figures 1-6 * * paragraph [0139] * | 1-7 | INV. G06Q10/0631 G06Q10/06312 H04L12/413 H04L12/64 H04L45/50 |
| | ----- | | |
| | | | TECHNICAL FIELDS SEARCHED (IPC) |
| | | | G06F H04L |

The present search report has been drawn up for all claims

| Place of search | Date of completion of the search | Examiner |
| --- | --- | --- |
| The Hague | 19 December 2024 | Toader, Elena Lidia |

EPO FORM 1503 03.82 (P04C01)

## ANNEX TO THE EUROPEAN SEARCH REPORT
## ON EUROPEAN PATENT APPLICATION NO.

EP 24 19 2946

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | Publication date | Patent family member(s) | Publication date |
|---|---|---|---|
| US 2022094571 A1 | 24-03-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070005411
- JP 2015215887 A
- JP 2017079352 A
- US 20220094571